# EUROPEAN PATENT APPLICATION

(11) **EP 4 760 791 A1**
(43) Date of publication of application: **17.06.2026**
(21) Application number: 25222508.1
(22) Date of filing: 11.12.2025
(51) Int. Cl.: H01M 4/04, H01M 4/66, H01M 4/70, H01M 10/0525, H01M 10/0562

(54) **ELECTRODE FOR RECHARGEABLE BATTERY, METHOD OF MANUFACTURING THE RECHARGEABLE BATTERY, AND RECHARGEABLE BATTERY INCLUDING THE ELECTRODE**

(30) Priority: 11.12.2024 KR 20240183720
(71) Applicant: SAMSUNG SDI CO., LTD., Yongin-si, Gyeonggi-do 17084 (KR)
(72) Inventor: JUNG, Da Eun, 16678 Suwon-si (KR); LEE, Seung Hun, 16678 Suwon-si (KR); PARK, Gwang Won, 16678 Suwon-si (KR); SHIN, Dong Kyoung, 16678 Suwon-si (KR); LEE, Mi Young, 16678 Suwon-si (KR)
(74) Representative: Marks & Clerk LLP

(57) **Abstract**

An electrode for a rechargeable battery includes a current collector having a first region and a second region. A dry electrode film is positioned on at least one surface of the first region and not positioned on the second region. Each of the first region and the second region includes a plurality of protrusions formed on the current collector. An average height of the protrusions in the second region is greater than an average height of the protrusions in the first region.

## Description

### BACKGROUND

### 1. Field

The present disclosure relates to an electrode for a rechargeable battery, a method of manufacturing an electrode for a rechargeable battery, and a rechargeable battery including the electrode.

### 2. Discussion of Related Art

With the rapid spread of electronic devices that use batteries, such as portable phones, notebook computers, electric vehicles, etc., the demand for high-energy-density and high-capacity rechargeable batteries has increased. Accordingly, the research and development for improving the performance of rechargeable lithium batteries are being conducted.

A rechargeable lithium battery includes an electrolyte and positive and negative electrodes containing an active material capable of intercalation and deintercalation of lithium ions. A rechargeable lithium battery produces electric energy by oxidation and reduction reactions when the lithium ions are intercalated into and deintercalated from the positive electrode and the negative electrode.

Research has been conducted on the manufacture of an electrode including a dry electrode film that is made without a solvent. The dry electrode film includes an electrode active material, a binder, a conductive material, and the like, and the dry electrode film is made in the form of a film or sheet.

To form an uncoated portion region on an electrode including a dry electrode film, there is a method of pattern-coating a current collector with an adhesion promoting layer. However, this method is difficult and expensive because the pattern coating needs to be performed according to the specifications of the battery. There is also a method of laminating a dry electrode film on the entire surface of a current collector and then removing only a part of the dry electrode film. However, this method can damage the current collector and/or the dry electrode film.

The above information disclosed in this background section is for aiding in the understanding of the background of the present disclosure and may contain information that does not constitute related or prior art.

### SUMMARY

The present disclosure is directed to providing an electrode for a rechargeable battery that has high adhesion between a current collector and a dry electrode film even when there is no adhesion promoting layer. The electrode may be easily made due to easy control of the location and/or shape and/or size of an uncoated portion region. The present disclosure is also directed to a method of manufacturing an electrode for a rechargeable battery and a rechargeable battery.

The present disclosure is further directed to providing an electrode for a rechargeable battery in which an uncoated portion region is formed only on a portion to which a tab is bonded to thereby increase an area of an active material layer region. Thus, an electrode is provided for a rechargeable battery with a maximized capacity. A method of manufacturing the electrode for a rechargeable battery and the rechargeable battery are also provided.

However, objects of the present disclosure are not limited to the above-described objects, and other objects that are not specifically mentioned herein will be clearly understood by those skilled in the art based on the description below.

According to an embodiment of the present disclosure, there is provided an electrode for a rechargeable battery including a current collector having a first region and a second region, and a dry electrode film positioned on at least one surface of the first region and not positioned on the second region, each of the first region and the second region includes a plurality of protrusions formed on the current collector, and an average height of the plurality of protrusions in the second region is greater than an average height of the plurality of protrusions in the first region.

According to one embodiment of the present disclosure, there is provided a method of manufacturing an electrode for a rechargeable battery including positioning a dry electrode film on an entire surface of a current collector on which a plurality of protrusions are formed, positioning a template only on the dry electrode film corresponding to the region to make a stack, with a thickness of the template being 60% or more of a thickness of the dry electrode film, rolling the stack, and removing the template and the dry electrode film located in another region from the stack to make an electrode for a rechargeable battery.

According to an embodiment of the present disclosure, there is provided a rechargeable battery including the electrode for a rechargeable battery or the electrode for a rechargeable battery manufactured by the method of manufacturing an electrode for a rechargeable battery.

At least some of the above and other features of the invention are set out in the claims.

### BRIEF DESCRIPTION OF THE DRAWINGS

The drawings illustrate embodiments of the present disclosure and further describe aspects and features of the present disclosure together with the detailed description below. The present disclosure is not limited to the embodiments depicted in the drawings.
FIG. 1 illustrates an electrode according to an embodiment of the present disclosure;
FIG. 2 is a schematic view of a dry electrode film laminated on a first region of a current collector without rolling;
FIG. 3 is a photograph of protrusions formed in the first region and a second region of the current collector in FIG. 2;
FIG. 4 is an enlarged photograph of a cross section of the first region of the current collector and the dry electrode film in an electrode according to an embodiment of the present disclosure;
FIG. 5 is a top plan view of the electrode according to an embodiment of the present disclosure;
FIG. 6 illustrates the first region in which the dry electrode film is located and the second region in which no dry electrode film is located in a conventional dry electrode;
FIG. 7 illustrates the formation of a tab in the electrode according to an embodiment of the present disclosure;
FIG. 8 illustrates the formation of a tab in a conventional dry electrode;
FIG. 9 illustrates a method of manufacturing an electrode according to an embodiment of the present disclosure; and
FIGS. 10 to 13 illustrate rechargeable lithium batteries according to embodiments.

### DETAILED DESCRIPTION OF EXEMPLARY EMBODIMENTS

Hereinafter, embodiments of the present disclosure will be described in detail with reference to the accompanying drawings. Terms or words used in this specification and claims should not be interpreted as limited to their usual or dictionary meanings and should be interpreted with meanings and concepts that conform to the technical idea of the present disclosure based on the principle that the inventor can appropriately define the concepts of the terms in order to describe his or her own invention in the best way. The embodiments described in this specification and the configurations shown in the drawings are only some embodiments of the present disclosure and do not represent all of the technical ideas of the present disclosure. Accordingly, it should be understood that there may be various equivalents and modifications that can replace them at the time of filing this application.

When used in the present specification, "comprise" and "include" and/or "comprising" and "including" specify the presence of the stated shapes, numbers, steps, operations, members, elements, and/or groups thereof and do not preclude the presence or addition of one or more other shapes, numbers, operations, members, elements, and/or groups thereof.

To help understanding of the disclosure, the accompanying drawings are not illustrated to scale and the dimensions of some components may be exaggerated. In addition, the same reference numbers may denote the same components in different embodiments.

When two objects of comparison are "the same," it means that they are "substantially the same." Accordingly, "substantially the same" may include a deviation that is considered low in the art, for example, a deviation within 5%. In addition, uniformity of a parameter over a given region may mean uniformity from the viewpoint of an average.

Although "first," "second," etc., are used to describe various components, these components are not limited by these terms. These terms are used only to distinguish one component from another, and unless otherwise stated, it is obvious that a first component may be a second component.

Throughout the specification, unless otherwise stated, each element may be singular or plural.

Arranging an arbitrary element "above (or below)" or "on (under)" another element may mean that the arbitrary element may contact the upper (or lower) surface of the element or still another element may also be interposed between the element and the arbitrary element located on (or under) the element.

In addition, when a certain component is described as being "connected," "coupled," or "joined" to another component, the components may be directly connected or joined, but it should be understood that another component may be "interposed" between the components, or the components may be "connected," "coupled," or "joined" through still another component. In addition, when a certain component is described as being "electrically coupled to" another component, this includes not only a case in which the certain component is "directly coupled" to another component, but also a case in which the certain component is "coupled" to another component with still another component interposed therebetween.

When referring to "A and/or B" throughout the specification, this means A, B or A and B unless otherwise specified. That is, the term "and/or" includes all or any combination of the plurality of listed items. When referring to "C to D," this means C or more and D or less unless otherwise stated.

The terminology used herein is intended to describe embodiments of the present disclosure and is not intended to limit the present disclosure.

The present disclosure generally relates to an electrode for a rechargeable battery, a method of manufacturing an electrode for a rechargeable battery, and a rechargeable battery including the electrode for a rechargeable battery. Hereinafter, only a rechargeable lithium battery will be described. However, the present disclosure may be applied to rechargeable batteries of different metal ions in addition to lithium batteries.

### Electrode for a rechargeable lithium battery

An electrode for a rechargeable lithium battery (hereinafter referred to as "electrode") according to an embodiment is an electrode including a dry electrode film.

The electrode includes a current collector having a first region and a second region, with a dry electrode film provided on the first region, and with the second region being an uncoated portion region. Each of the first region and the second region includes a plurality of protrusions formed on the current collector, and an average height of the plurality of protrusions of the second region is greater than an average height of the plurality of protrusions of the first region.

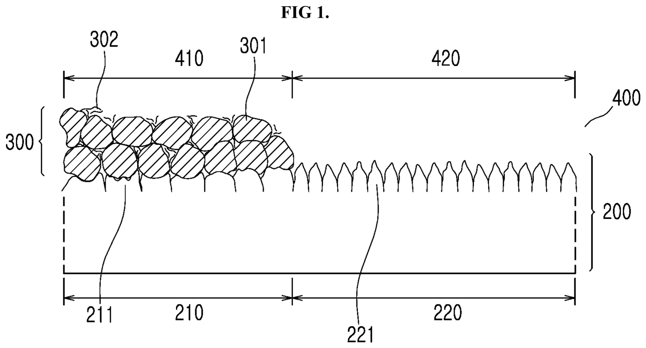

FIG. 1 illustrates an electrode according to an embodiment of the present disclosure.

Referring to FIG. 1, an electrode 400 includes an active material layer region 410 including a dry electrode film 300 and an uncoated portion region 420 where the active material layer is not provided.

The electrode 400 includes a current collector 200 having the first region 210 and the second region 220. The dry electrode film 300 may be provided in the first region 210 such that the first region 210 forms the active material layer region 410. The dry electrode film 300 is not provided in the second region 220 such that the second region 220 forms the uncoated portion region 420.

FIG. 1 illustrates the dry electrode film 300 provided on only one surface of the first region 210 of the current collector 200. But, in other embodiments, the dry electrode film 300 may also be provided on the other surface of the first region 210. Similarly, FIG. 1 illustrates protrusions 211 and 221 formed on only one surface of each of the first region 210 and the second region 220 of the current collector 200. But the protrusions 211 and 221 may also be formed on another surface of each of the first region 210 and the second region 220.

The current collector 200 does not include an adhesion promoting layer. Here, an "adhesion promoting layer" is a layer formed on a surface of the current collector 200 to increase adhesion between the current collector and the dry electrode film 300 and may include a primer layer. A primer layer may be formed of a composition including a conductive material and a binder. The adhesion promoting layer may also collectively refer to a layer that increases the adhesion between the current collector 200 and the dry electrode film 300.

### First region

The first region 210 includes a plurality of protrusions 211 that extend from the current collector 200.

The plurality of protrusions 211 protrude a predetermined height from the current collector 200 and penetrate the dry electrode film 300. The plurality of protrusions 211 may provide an anchoring effect that physically couples the current collector 200 to the dry electrode film 300. Because the dry electrode film 300 and the plurality of protrusions 211 are in contact with each other, there is increased adhesion between the first region 2120 of the current collector 200 and the dry electrode film 300 even when there is no adhesion promoting layer. Thus, the electrode 400 can be easily processed.

In one specific example, the penetration of the protrusions 211 into the dry electrode film 300 is obtained by rolling between the current collector and the dry electrode film.

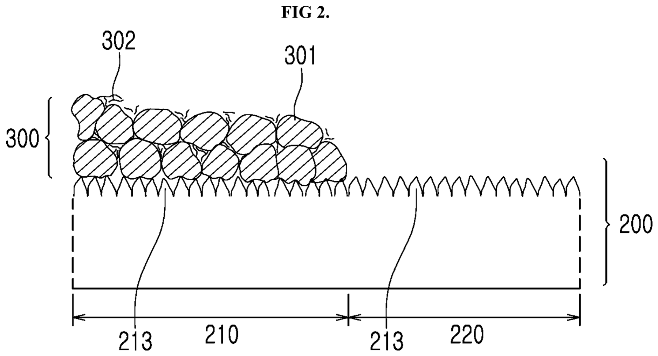

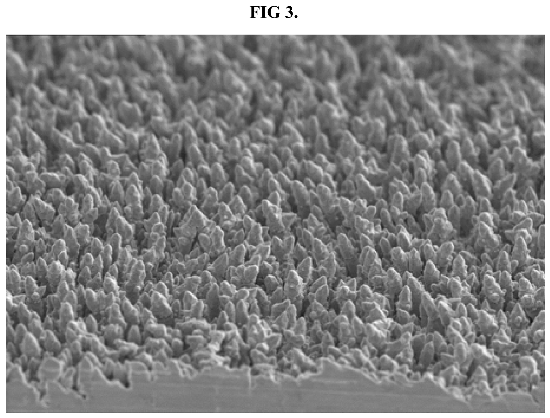

FIG. 2 is a schematic view of a dry electrode film laminated on a first region of a current collector without rolling. FIG. 3 is a photograph of protrusions formed in the first region and the second region of the current collector before rolling. Referring to FIG. 2, the current collector 200 has the plurality of protrusions 213 formed thereon, but the protrusions 213 do not penetrate the dry electrode film 300. Referring to FIG. 3, the protrusions 213 formed in the first region 210 of the current collector 200 before rolling are needle-shaped and have sharp ends on outermost surfaces, which can be advantageous in increasing adhesion.

Referring to FIGS. 1 and 2, when the dry electrode film 300 is laminated on the first region 210 and rolled, the plurality of protrusions 211 may penetrate the dry electrode film 300 and thereby increase adhesion between the current collector 200 and the dry electrode film 300 as compared to the current collector that does not include protrusions. Although not illustrated in FIG. 1, the plurality of protrusions 213 may penetrate the dry electrode film 300 so that at least a part of the dry electrode film 300 is located between the protrusions 213.

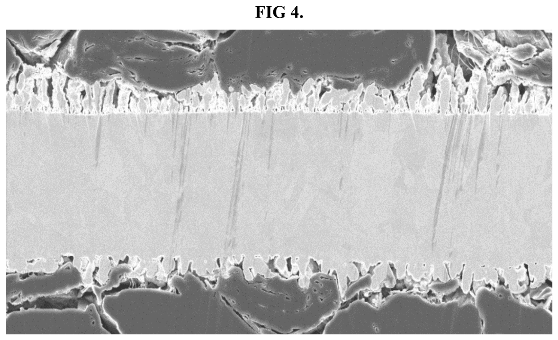

FIG. 4 is an enlarged photograph of a cross section of the first region of the current collector and the dry electrode film in an electrode according to an embodiment of the present disclosure. Referring to FIG. 4, it can be seen that the plurality of protrusions 211 and 221 extending from the current collector penetrate the dry electrode film 300. Thus, the protrusions 211 and 221 may replace the conventional adhesion promoting layer because the current collector 200 and the dry electrode film 300 are in close contact with each other.

According to some embodiments, an average height of the plurality of protrusions 211 in the first region 210 may be 1.5 µm or more, for example, may range from 1.5 µm to 5.0 µm. Here, the "average height" is an average value of the heights of the protrusions 211 and may be an average value obtained by measuring the heights of the protrusions 211 included per unit area. For example, the average height of the protrusions 211 may be measured by capturing an image of a cross section of a sample processed for 20 minutes or more at an ion voltage of 5.0 kV or higher using JEOL Ltd. Mini SEM (JCM-7000) and taking an average value of heights of 20 protrusions 211. Here, the "height of the protrusion" refers to a vertical distance between an uppermost portion of the protrusion 211 and the current collector when the protrusion 211 extends vertically from the current collector.

According to embodiments, an average distance of the plurality of protrusions 211 in the first region 210 may be 5.0 µm or less, for example, may range from 0.5 µm to 5.0 µm or from 2.0 µm to 5.0 µm (e.g. from 2.0 µm to 4.95 µm). In these ranges, a degree of penetration of the protrusions 211 into the dry electrode film 300 is increased to thereby increase adhesion between the dry electrode film 300 and the current collector 200. Here, the "average distance" is an average value of distances between protrusions 211 of the current collector 200 and may be an average value obtained by measuring distances between protrusions 211 included per unit area, and the distance between the protrusions 211 may be measured in the same manner as the height of the protrusions 211.

According to some embodiments, the protrusions 211 may be needle-shaped. Because the needle-shaped protrusions 211 can easily penetrate the dry electrode film 300, the needle-shaped protrusions 211 increase the adhesion between the current collector 200 and the dry electrode film 300. When the plurality of protrusions 211 are formed on the current collector with such shapes, the above-described average heights, and the above-described average distances, there is no limitation on the method for forming the protrusions 211. But, in order for the plurality of protrusions 211 to be integrally formed with the current collector, the plurality of protrusions 211 may be formed by plating. According to one embodiment, the plurality of protrusions 211 may be formed by plating the current collector. The plating may include electroplating and electroless plating and may preferably include electroplating.

The electroplating may be performed by the following method. But the present disclosure is not limited thereto. Hereinafter, the description is with respect to a case in which the current collector is copper foil, but the present disclosure is not limited in this regard.

The electroplating may be performed by adjusting an aqueous solution containing a nickel salt and a copper salt to a pH of 1 to 5 (e.g., 2 to 4) to prepare an electrolyte, adding a current collector and an insoluble positive electrode to the electrolyte, and then performing electrolysis at an electrolyte temperature of 25 °C to 45 °C and a current density of 1 to 5 A/dm² for 1 to 5 seconds. The nickel salt may include nickel sulfate, nickel nitrate, nickel chloride, nickel acetate, and the like, and these may be used alone or in a combination of two or more thereof. But the present disclosure is not limited to these examples. The copper salt may include copper sulfate, copper nitrate, copper chloride, copper acetate, and the like, and these may be used alone or in a combination of two or more thereof. But the present disclosure is not limited to these examples.

A concentration of each of the nickel salt and the copper salt in the electrolyte may be adjusted based on a desired average height of target protrusions.

The electroplating may be performed in an electrolyte containing the nickel salt and the copper salt, but electroplating using an aqueous solution containing a copper salt and sulfuric acid also may be performed. The copper salt may include copper sulfate, copper nitrate, copper chloride, copper acetate, and the like, and these may be used alone or in a combination of two or more thereof. But the present disclosure is not limited to these examples. The electroplating may be performed by adding the current collector and the insoluble electrode as a positive electrode to the electrolyte and performing electrolysis at a liquid temperature (i.e., electrolyte temperature) of 25 °C to 45 °C and a current density of 10 to 20 A/dm² for 1 to 5 seconds, but is not limited thereto.

### Second region

As the dry electrode film 300 is not provided in the second region 220, the second region 220 is an uncoated portion region 420. The uncoated portion region 420 may be used to form a tab.

The second region 220 also includes a plurality of protrusions 221 extending from the current collector 200.

An average height A of the plurality of protrusions 221 in the second region 220 may be greater than an average height B of the plurality of protrusions 211 in the first region 210. This may be caused by the method of manufacturing a rechargeable battery electrode 400 described below. The first region 210 and the second region 220 in which the average heights of the plurality of protrusions 211 and 221 are different may be made simultaneously by the arrangement and rolling of a template, which will be described below. Accordingly, because there is no need to pattern-coat an adhesion promoting layer on the current collector 200 to form a conventional uncoated portion region 420, the manufacturing of the electrode 400 is made easy.

According to an embodiment, a ratio of A to B may be greater than 1.0, for example, greater than 1.0 and 2.0 or less, for example, may range from 1.1 to 2.0. According to an embodiment, A may be 1.7 µm or more, for example, from 1.7 µm to 5.0 µm. In this range, the electrode 400 having the first region 210 and the second region 220 can be easily manufactured.

The average height B of the plurality of protrusions 221 in the second region 220 may also be determined by the same measurement method as the average height of the plurality of protrusions 211 in the first region 210. The plurality of protrusions 221 in the second region 220 may also be formed by the same method as the plurality of protrusions 211 in the first region 210, for example, by plating. In particular, the plurality of protrusions 221 in the second region 220 may be formed simultaneously with the plurality of protrusions 211 in the first region 210 by the same plating, thereby allowing for easy formation of the electrode 400.

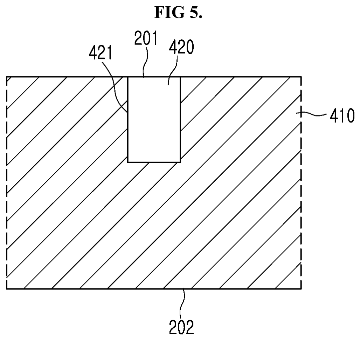

FIG. 5 is a top plan view of the electrode according to an embodiment of the present disclosure.

Referring to FIG. 5, the uncoated portion region 420/second region 220 of the current collector 200, may be completely surrounded by the active material layer region 410/first region 210 of the current collector 200. As illustrated in FIG. 5, an outer surface 421 of the uncoated portion region 420, that is, an outer surface of the second region 220 of the current collector 200, may come into complete contact with the active material layer region 410, that is, the first region 210 of the current collector 200. That is, the second region 220 of the current collector 200, is not formed to extend from a first end 201 of the current collector to a second end 202, and the first end 201 and the second end 202 face each other.

The uncoated portion region 420/the second region 220 of the current collector 200, may have a quadrangular shape such as a rectangle shape or a square shape in the plan view, and three surfaces of the uncoated portion region 420/the second region 220 of the current collector 200, corresponding to three sides of the quadrangle may be completely surrounded by the active material layer region 410/the first region 210 of the current collector 200.

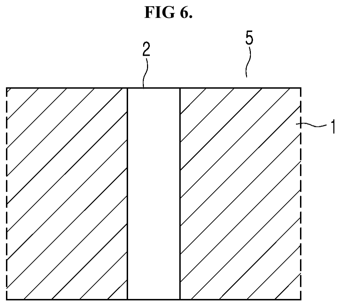

FIG. 6 illustrates another embodiment of the active material layer region 1 (dry electrode film) and the uncoated portion region 2 in which no dry electrode film is provided in the conventional dry electrode 5.

Comparing FIGS. 5 and 6, because the uncoated portion region 420 needs to be formed only in a portion where the tab is formed in the dry electrode 400 of FIG. 5 unlike the dry electrode 5 of FIG. 6, it is possible to increase an area of the dry electrode film 300 including the active material by a difference in area between the uncoated portion region 420 of the dry electrode 400 of FIG. 5 and the uncoated portion region 2 of the dry electrode 5 of FIG. 6. Such a configuration further increases the capacity of the battery.

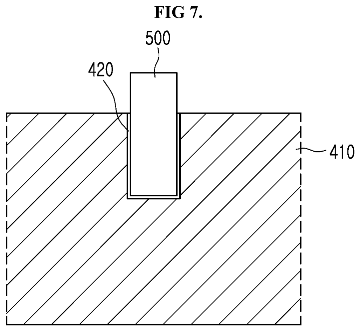

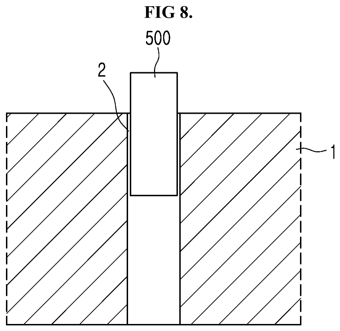

FIG. 7 illustrates an electrode on which the tab is formed according to an embodiment of the present disclosure. FIG. 8 illustrates a conventional dry electrode on which a tab is formed.

FIGS. 7 and 8 illustrate tabs 500 formed in parts of uncoated portion regions 420 and 2. As compared to the area of the uncoated portion region 2 for forming the tab 500 in FIG. 8, in FIG. 7 the area of the uncoated portion region 420 for forming the tab is significantly smaller, and the area of the dry electrode film including the active material is significantly larger. Thus, the configuration depicted in FIG. 7 may have increased capacity.

The first region 210 and the second region 220 may be implemented by the method of manufacturing an electrode of a rechargeable lithium battery that will be described below.

Referring again to FIGS. 1 and 2, the dry electrode film 300 may include an active material 301 and a binder 302. Each of the active material 301 and the binder 302 will be described below. In a specific example, the thickness of the dry electrode film 300 in the electrode may range from 20 µm to 180 µm.

The dry electrode according to an embodiment of the present disclosure may be a negative electrode or a positive electrode.

### Negative electrode

The negative electrode may include a current collector having a first region and a second region, with a dry electrode film provided on at least one surface of the first region, and with the second region being an uncoated portion region. Each of the first region and the second region may include a plurality of protrusions extending from the current collector, with an average height of the plurality of protrusions in the second region being greater than an average height of the plurality of protrusions in the first region. The dry electrode film may include a negative electrode active material and a binder.

The current collector is not particularly limited as long as it provides high conductivity without causing an undesirable chemical change in the battery. For example, the current collector may be stainless steel, aluminium, nickel, titanium, sintered carbon, copper, or aluminium or stainless steel, copper foil, nickel foil, stainless steel foil, titanium foil, nickel foam, copper foam, a polymer substrate coated with a conductive metal and surface-treated with carbon, nickel, titanium, silver, etc.

The current collector may have a thickness of 5 µm to 50 µm, but is not limited in this regard. The current collector may be, for example, a copper foil.

The dry electrode film may include a negative electrode active material and a binder and may also include an electrode powder including a conductive material. The dry electrode film may have a strip shape or a sheet shape having a predetermined thickness.

The negative electrode active material includes a material capable of reversibly intercalating/deintercalating lithium ions, a lithium metal, an alloy of lithium metal, a material that may be doped and dedoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon include graphite, such as natural graphite or artificial graphite, and examples of the amorphous carbon include soft carbon, hard carbon, a pitch carbide, a meso-phase pitch carbide, sintered coke, and the like.

A Si-based negative electrode active material or a Sn-based negative electrode active material may be used as the material capable of being doped and dedoped with lithium. The Si-based negative electrode active material may be silicon, a silicon-carbon composite, SiOₓ (0<x<2), a Si-based alloy, or a combination thereof.

The silicon-carbon composite may be a composite of silicon and amorphous carbon. According to an embodiment, the silicon-carbon composite may be in the form of silicon particles with amorphous carbon on the surfaces of the silicon particles.

The silicon-carbon composite may further include crystalline carbon. For example, the silicon-carbon composite may include a core including crystalline carbon and silicon particles and an amorphous carbon coating layer located on a surface of the core.

In a specific example, the negative electrode active material may have an average particle diameter D50 of 10 µm to 20 µm, for example, 13 µm to 18 µm. In this range, the negative electrode active material may be used in the current collector.

The binder may be included without particular limitation as long as it may be fiberized in the manufacturing a dry electrode film, which will be described below. Fiberization is a process of dividing a polymer on a microscale. The fiberization may be performed using a mechanical shear force, etc. The fiberized polymer fiber may have a surface loosened to generate a large number of microfibers, and the generated microfibers may cause the electrode active material and/or a conductive material to cohesively aggregate with each other, thereby allowing the dry electrode film to be made.

In specific examples, the binder may include polytetrafluoroethylene (PTFE), a polyolefin, or a mixture thereof. For example, the binder may include polytetrafluoroethylene, and more specifically, may be polytetrafluoroethylene. The polytetrafluoroethylene may be included in an amount of 60 wt% or more, for example, 90 to 100 wt%, based on the total weight of the binder.

In other examples, the binder may further include a non-fiberized binder. For example, the non-fiberized binder may include one or more of polyethylene oxide, polyvinylidene fluoride, and polyvinylidene fluoride-co-hexafluoropropylene.

In a specific example, the binder may be included in the dry electrode film in a fiberized state.

The conductive material may include a carbon black-based compound, graphite, such as natural graphite or artificial graphite, conductive fibers such as carbon fibers, metal fibers, and the like, metal powders, such as fluorinated carbon, aluminium, nickel powder, and the like, conductive whiskers, such as zinc oxide, potassium titanate, and the like, conductive metal oxides, such as titanium oxide and the like, conductive materials, such as polyphenylene derivatives and the like, and the like may be used.

In embodiments, the dry electrode film may include 80 to 99 wt%, for example, 90 to 99.5 wt% of the negative active material, 0.5 to 20 wt%, for example, 0.5 to 10 wt% of the binder, and 0.5 to 20 wt%, for example, 0.5 to 10 wt% of the conductive agent. In these ranges, the dry electrode film can be easily made, and it is possible to promote PTFE fiberization in the electrode, thereby increasing mechanical strength.

### Positive electrode

The positive electrode may include a current collector having a first region and a second region, with a dry electrode film provided on at least one surface of the first region, and with the second region being an uncoated portion. Each of the first region and the second region may include a plurality of protrusions extending from the current collector, with an average height of the plurality of protrusions in the second region being greater than an average height of the plurality of protrusions in the first region. The dry electrode film may include a positive electrode active material and a binder.

As the current collector, the same type of current collector as described above with respect the negative electrode may be used. For example, the current collector may be an aluminium foil.

The dry electrode film may include a positive electrode active material and a binder and may also include an electrode powder including a conductive material. The dry electrode film may have a strip shape or a sheet shape having a predetermined thickness.

As the positive electrode active material, a compound capable of reversible intercalation and deintercalation of lithium (a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-8-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCOG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8). In these chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

In a specific example, the positive electrode active material may have an average particle diameter D50 of 10 µm to 50 µm, for example, 20 µm to 40 µm. In this range, the positive electrode active material may be used in the current collector.

The binder and the conductive agent may be substantially the same as those described above for the negative electrode.

In embodiments, the dry electrode film may include 80 to 99 wt%, for example, 90 to 99.5 wt% of the positive active material, 0.5 to 20 wt%, for example, 0.5 to 10 wt% of the binder, and 0.5 to 20 wt%, for example, 0.5 to 10 wt% of the conductive agent. In these ranges, the dry electrode film can be easily made, and it is possible to promote PTFE fiberization in the electrode, thereby increasing mechanical strength.

The dry electrode film may be made by the following operations. A method to be described below may be applied to each of the negative electrode and the positive electrode:
A process (a) of preparing a powder mixture including an electrode active material, a binder, and a conductive agent;
a process (b) of kneading the powder mixture to prepare a mixture lump;
a process (c) of grinding the mixture lump to obtain an electrode powder; and
a process (d) of calendering the electrode powder to obtain a self-supporting dry electrode film.

First, a powder mixture is prepared by mixing the electrode active material, the binder, and the conductive material. The mixing is performed so that the electrode active material and the binder are uniformly distributed in the mixture. Because the mixing is done in powder form, there is no particular limitation on the mixing as long as simple mixing is made possible. However, because the mixture is for preparing a dry electrode film, the mixture does not include a solvent. The mixing may be performed by dry mixing and performed by adding a material to a device such as a blender.

The mixing time is not particularly limited but may range, for example, from 1 second to 10 minutes. The mixing speed is not particularly limited but may be appropriately controlled within a range of about 3,000 rpm to 30,000 rpm. As a specific example, the mixture may be prepared by mixing the electrode active material and the binder in a mixer at 5,000 rpm to 20,000 rpm for 30 seconds to 2 minutes, specifically, at 10,000 rpm to 15,000 rpm for 30 seconds to 5 minutes. Such mixing conditions provide for high uniformity and control of crystallinity of a binder resin.

Next, a kneading process for fiberizing a binder with respect to the mixture obtained above is performed. The kneading forms a mixture mass having a solid content of 100 wt% by combining or connecting the electrode active materials and/or the conductive material while the binder is fiberized. The kneading of the process (b) may be controlled at a speed of 10 rpm to 100 rpm. For example, the kneading may be controlled at a speed of 40 rpm or more or 70 rpm or less within the above range. The kneading may be performed, for example, for 1 minute to 30 minutes. In specific examples, the kneading is performed at a speed of 40 rpm to 70 rpm within the above range for 3 to 7 minutes. A shear rate of the kneading may be controlled within the range of 10/s to 500/s. In some examples, the kneading is performed for 1 to 30 minutes, and the shear rate is within a range of 30/s to 100/s.

The kneading operation may be performed under high temperature and atmospheric pressure or higher conditions. In specific examples, the kneading for the mixture may be performed within a range of 70 °C to 200 °C, specifically, 90 °C to 150 °C.

The kneading may be performed at atmospheric pressure or higher, specifically, 1 atm to 3 atm, and more specifically, 1.1 atm to 3 atm. When the kneading is performed at a pressure above these ranges, there may be a problem that the formed fibers may be cut or the density of the mixture lump may become too high due to an excessive shear force and pressure applied. When a low-shear mixing process is performed under conditions of a high temperature and atmospheric pressure or higher instead of high-shear mixing, the intended effect of the present disclosure can be achieved.

Next, an operation of obtaining an electrode powder by re-grinding the mixture lump prepared through the kneading operation is performed. Specifically, the mixture lump prepared through the kneading operation may be directly calendered. But in this case, the mixture lump may need to be pressed under a strong pressure and high temperature to be made into a thin film form. As such, a problem may occur in that the density of the film may become too high or a uniform film cannot be obtained. To prevent this, in the present disclosure the prepared mixture lump may be subjected to the grinding operation.

The grinding is not limited but may be performed using a known grinding device such as a blender or a grinder. In specific embodiments of the present disclosure, a speed of the grinding may be controlled within a range of 3,000 rpm to 30,000 rpm. The grinding time may be appropriately controlled within a range of 1 second to 10 minutes. However, the grinding speed and time are not limited to the above ranges. As specific examples, the grinding may be performed at a speed of 5,000 rpm to 20,000 rpm for 30 seconds to 10 minutes, or at a speed of 10,000 rpm to 18,000 rpm for 30 seconds to 5 minutes. Sufficient grinding is performed within the above ranges, making it easy to form a film and reducing a degree of fine dust generated.

The electrode powder is thermally pressed to make a dry electrode film. Specifically, the electrode powder obtained by completing the grinding operation as described above is added to the calendering process. The electrode powder is thermally pressed in the calendering process into a sheet-shaped dry electrode film. The calendering process may be performed by a pair of facing calendering rollers. In an embodiment of the present disclosure, the calendering process may be performed by passing the electrode powder through a plurality of calendering rollers.

The electrode powder may be preprocessed before performing the calendering process. The preprocessing process may include applying heat to the electrode powder so that the temperature of the powder is maintained at 80 °C or higher, preferably, 100 °C or higher for a predetermined time. The preprocessing process time may be 1 minute or longer and may be adjusted according to the amount of the powder. For example, the temperature of the powder may be maintained at a temperature of 80 °C or higher for 1 minute or longer or at a temperature of 100 °C or higher for 1 minute or longer. Alternatively, the heating temperature of the electrode powder is preferably controlled to be the melting point of a binder resin or less in order to prevent deterioration of a component of the electrode included in the electrode powder such as binder resin. For example, the heating temperature of the electrode powder may be controlled to be 320 °C or lower. The preprocessing process may be performed using a typical heating device such as a convection oven or an infrared heating device. At this time, the electrode powder is preferably stirred and heated without stagnating.

### Method of manufacturing an electrode for a rechargeable lithium battery

Hereinafter, a method of manufacturing an electrode for a rechargeable lithium battery will be described.

The manufacturing method includes positioning a dry electrode film on the entire surface of a current collector having a third region and a fourth region on which a plurality of protrusions are formed (operation 1), positioning a template only on the dry electrode film corresponding to the third region and manufacturing a stack (operation 2), rolling the stack (operation 3), and removing only the template and the dry electrode film located on the fourth region from the stack to make an electrode for a rechargeable battery (operation 4). A thickness of the template in the operation 2 is 60% or more of a thickness of the dry electrode film in the operation 1.

In the electrode, the first region as described above may be derived from the third region, and the second region as described above may be derived from the fourth region.

In the manufacturing method, the first region and the second region may be simultaneously formed using a current collector in which protrusions are formed by plating and without performing pattern coating of an adhesion promoting layer. Thus, the processing is made easier and there is a reduced possibility of damage to the electrode. Further, the shape and/or size and/or location of the uncoated portion region can easily be controlled by controlling the shape and/or size and/or location of the template, thereby making the formation of the uncoated portion region easier. In addition, as illustrated in the comparison of FIGS. 5 and 6 and the comparison of FIGS. 7 and 8, it is possible to increase the area of the dry electrode film, thereby further increasing the capacity of the battery.

### (Operation 1)

A current collector having a third region and a fourth region on which a plurality of protrusions are formed is prepared. Each of the third region and the fourth region is formed with the plurality of protrusions extending from the current collector. The plurality of protrusions may be formed by plating as described above.

An average height of the plurality of protrusions in each of the third region and the fourth region may be the same or different and may be 1.5 µm or more. For example, the average height may range from 1.5 µm to 5.0 µm.

The dry electrode film may be made by the above-described method.

According to an embodiment, the thickness of the dry electrode film in operation 1 may range from 20 µm to 180 µm, for example, from 40 µm to 160 µm.

### (Operation 2)

In operation 2, a stack is manufactured by positioning a template only on the dry electrode film corresponding to the third region. Accordingly, in the stack, only the dry electrode film is located in the fourth region and no template is located thereon.

The template can increase a degree of rolling of the dry electrode film corresponding to the third region as compared to the dry electrode film corresponding to the fourth region when the stack is rolled in the operation 3 (described below), Thus, the template can increase a degree of adhesion between the dry electrode film and the current collector corresponding to the third region.

According to an embodiment, the thickness of the template is 60% or more (thickness ratio) of the thickness of the dry electrode film in operation 1. In this range, the degree of adhesion between the dry electrode film and the current collector corresponding to the third region can be increased, thereby increasing the adhesion between the dry electrode film and the current collector. In addition, even when the rolling in operation 3 is performed in the above range, the protrusions in the fourth region may penetrate the dry electrode film less, which allows the dry electrode film located on the fourth region to be easily removed in operation 4. The thickness ratio may range, for example from 60% to 100% or from 60% to 80%. The thickness of the template may be, for example, 10 µm or more, for example, may range from 10 µm to 120 µm.

According to embodiments, the template may be a metal plate such as aluminium or the like. An area and/or shape of the template may be adjusted according to the area and/or shape of the third region.

### (Operation 3)

In the operation 3, the stack is rolled.

The rolling may be performed on both the third region and the fourth region. The rolling can increase the degree of adhesion between the dry electrode film and the current collector corresponding to the third region. In addition, the rolling can further increase the degree of adhesion between the dry electrode film and the current collector corresponding to the third region by the template as compared to the degree of adhesion between the dry electrode film and the current collector corresponding to the fourth region.

The rolling may be performed by a conventional method known to those skilled in the art such as a method using facing rolling rolls. The rolling roll may be a conventional material known to those skilled in the art.

The rolling may be performed under a load of 1,000 to 3,000 kg. In this range, it is easy to remove the dry electrode film corresponding to the fourth region without removing the dry electrode film corresponding to the third region in the rolling of the stack having the above thickness ratio.

### (Operation 4)

The template is removed from the stack, and only the dry electrode film located on the fourth region is removed. By removing the template, a stack of one region of the current collector corresponding to the first region of the electrode and the dry electrode film may be formed.

By removing the dry electrode film located on the fourth region, the second region of the current collector of the electrode may be formed.

The peeling of the dry electrode film located on the fourth region may be performed by a conventional method known to those skilled in the art, for example, using a release device.

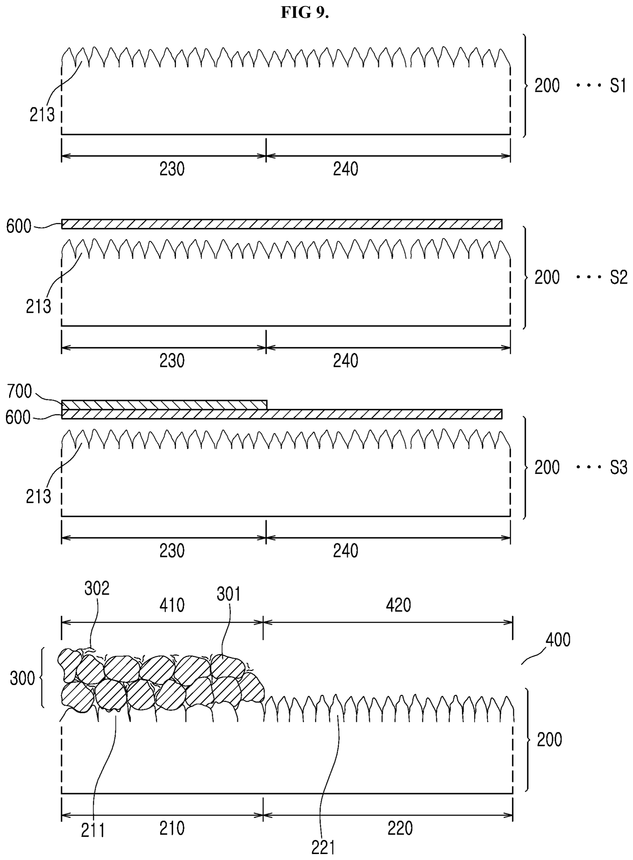

FIG. 9 illustrates a method of manufacturing an electrode according to an embodiment of the present disclosure.

Referring to FIG. 9, the method may include preparing the current collector 200 having the third region 230 and the fourth region 240 and having the plurality of protrusions 213 formed in each of the third region 230 and the fourth region 240 (operation S1), laminating a dry electrode film 600 on the third region 230 and the fourth region 240, which are front surfaces of the current collector 200 (operation S2), positioning a template 700 on the dry electrode film 600 only on the third region 230, which is one region of the current collector 200 (operation S3), and making the dry electrode having the cross section of FIG. 1 by rolling all of the current collector, the template, and the dry electrode film and removing only the dry electrode film corresponding to the template and the fourth region 240 (operation S4).

### Rechargeable lithium battery

Embodiments of the present disclosure include a lithium secondary battery comprising an electrode as described above.

In one embodiment, the battery may include a positive electrode and a negative electrode according to the embodiments described above. In another embodiment, one of a positive electrode and a negative electrode according to the above-described embodiments may be provided.

The negative electrode may be made using a composition comprising the negative electrode active material that is the same as described above. The composition may further include a binder and/or a conductive material. The negative electrode may be made using a wet process. The binder and conductive material may be selected from common types known to those skilled in the art.

The positive electrode may be made using a composition comprising the positive electrode active material that is the same as described above. The above composition may further include a binder and/or a conductive agent. The positive electrode may be made using a wet process. The binder and conductive agent may be selected from common types known to those skilled in the art.

The rechargeable lithium battery may further include an electrolyte solution. The electrolyte solution may include a non-aqueous organic solvent and a lithium salt.

The non-aqueous organic solvent may function as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone or in combination of two or more.

When using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be cylindrical, prismatic, pouch, or coin-type depending on its shape.

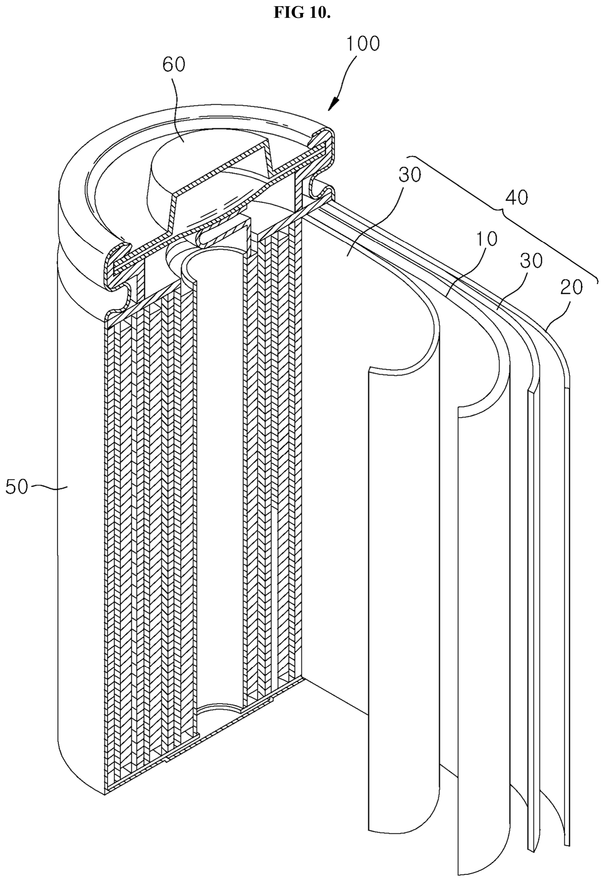

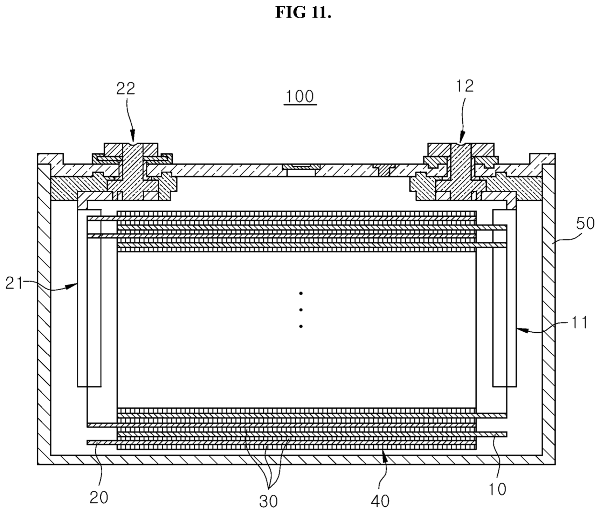

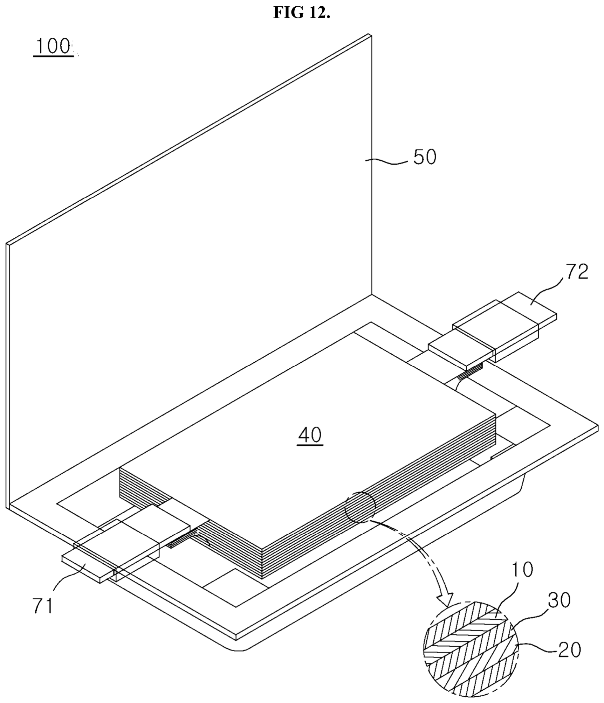

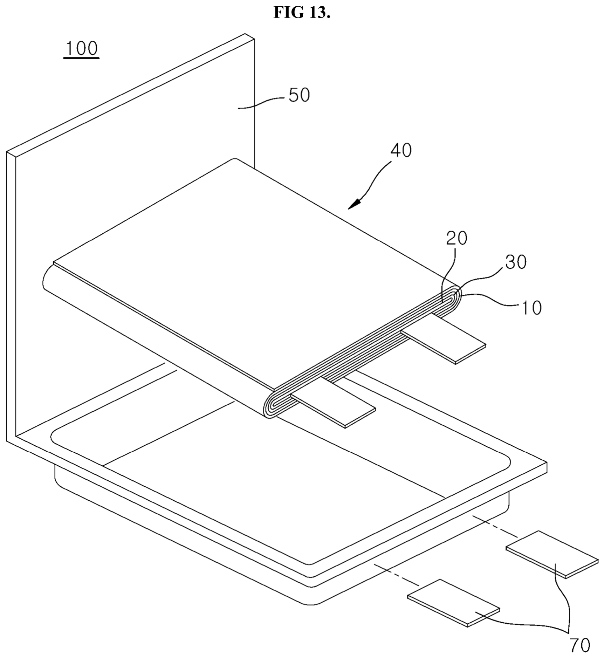

FIGS. 10 to 13 are schematic views of rechargeable lithium batteries according to embodiments. FIG. 10 shows a cylindrical battery, FIG. 11 shows a prismatic battery, and FIGS. 12 and 13 show pouch-type batteries. Referring to FIGS. 10 to 13, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). As shown in FIG. 10, the rechargeable lithium battery 100 may include a sealing member 60 sealing the case 50. As shown in FIG. 11, the rechargeable lithium battery 100 may include a positive lead tab 11, a positive terminal 12, a negative lead tab 21, and a negative terminal 22. As shown in FIGS. 12 and 13, the rechargeable lithium battery 100 may include an electrode tab 70, which may be, for example, a positive electrode tab 71 and a negative electrode tab 72 forming an electrical path for inducing the current formed in the electrode assembly 40 to outside of the battery.

Rechargeable lithium batteries according to embodiments may be used in automobiles, mobile phones, and/or various types of electric devices, as non-limiting examples.

The lithium secondary battery described above can be used to make a battery pack. A battery pack according to an embodiment of the present disclosure includes an assembly of individual batteries electrically connected to each other and a pack housing the battery. Components such as a bus bar, a cooling unit, and external terminals for electrical connection between the batteries may be included.

The battery pack may be mounted on a vehicle. Examples of the vehicle include an electric vehicle, a hybrid vehicle, or a plug-in hybrid vehicle. The vehicle may include a four-wheel vehicle or a two-wheel vehicle. A vehicle according to an embodiment of the present disclosure includes a battery pack according to an embodiment of the present disclosure. The vehicle operates by receiving power from the battery pack according to an embodiment of the present disclosure.

Hereinafter, examples and comparative examples of the present disclosure will be described. However, the following are merely examples of the present disclosure, and the present disclosure is not limited to the following examples.

### Example 1

### Preparation of dry electrode film

A powder mixture was obtained by adding 96.7 wt% of artificial graphite as a negative electrode active material, 1.8 wt% of polytetrafluoroethylene as a binder, and 1.5 wt% of carbon black to a blender and mixing them at 10,000 rpm for 1 minute. Next, an electrode powder was obtained by adding the obtained powder mixture to a kneader, kneading the powder mixture at 110 °C and 60 rpm for 5 minutes to obtain a mixture lump, then adding the mixture lump to the blender, and grinding at 14,000 rpm for 60 seconds. Thereafter, a dry electrode film (thickness 117 µm) was obtained by repeatedly pressing the electrode powder using a calendar roll (a diameter of the roll: 200 mm, temperature of the roll: 70 °C).

### Plating of current collector

A current collector was plated with copper by an electroplating method, to from a current collector including a plurality of protrusions extending from the current collector. The protrusions had an average height of 2.5 µm. A third region for forming an active material layer region and a fourth region for forming an uncoated portion region were specified in the current collector.

### Manufacturing of electrode

The dry electrode film was provided on the entire surface of both the third region and the fourth region of the current collector.

A stack was made by arranging an aluminium template (aluminium metal plate, thickness: 70 µm, 60% of the thickness of the dry electrode film) only on an upper surface of the dry electrode film on the third region.

The stack was rolled under a load of 1,600 kg while passing through a space between facing rolling rolls.

A dry electrode (having a flat surface as shown in FIG. 5) was made by removing the template and only the dry electrode film located on the fourth region.

### Example 2

A dry electrode film (a thickness of 117 µm) and a current collector (an average height of a plurality of protrusions was 2.5 µm) were made by the same method as in Example 1.

A dry electrode was made by the same method as in Example 1, except that an aluminium template (aluminium metal plate, thickness: 82 µm, 70% of the thickness of the dry electrode film) was used.

### Example 3

A dry electrode film (a thickness of 117 µm) and a current collector (an average height of a plurality of protrusions was 2.5 µm) were made by the same method as in Example 1.

A dry electrode was made by the same method as in Example 1, except that an aluminium template (aluminium metal plate, thickness: 94 µm, 80% of the thickness of the dry electrode film) was used.

### Comparative Example 1

A dry electrode film (a thickness of 117 µm) and a current collector (an average height of a plurality of protrusions was 2.5 µm) were made by the same method as in Example 1.

A dry electrode was made by the same method as in Example 1, except that an aluminium template (aluminium metal plate, thickness: 64 µm, 55% of the thickness of the dry electrode film) was used.

The average heights of the plurality of protrusions in the first and second regions of the electrodes in the examples and comparative examples are shown in Table 1 below. The average height of the plurality of protrusions was measured by the method described above. Adhesion between the first region and the dry electrode film was measure by the following method:
The first region and the dry electrode film were peeled off at a peeling angle of 180° using a UTM, and the dry electrode film was evaluated to be good when it did not easily peel off and evaluated to be bad when it was easily removed.

**Table 1**

| | Example 1 | Example 2 | Example 3 | Comparative Example 1 |
|---|---|---|---|---|
| Ratio of thickness | 60% | 70% | 80% | 55% |
| Whether dry electrode film of fourth region is removed when template is removed | Removed | Removed | Removed | Not removed |
| Average height of plurality protrusions of first region | 2.3 | 2.3 | 2.3 | 2.3 |
| Average height of plurality protrusions of second region | 2.5 | 2.5 | 2.5 | 2.4 |
| Adhesion between first region and dry electrode film | Good | Good | Good | Good |

The ratio of a thickness referred to in Table 1 is the ratio of the thickness of the aluminium plate to the thickness of a dry electrode film

As shown in Table 1, according to the method of manufacturing an electrode of the examples, the adhesion between the first region and the dry electrode film was excellent, and the dry electrode film was easily removed so that the uncoated portion region was easily formed.

On the other hand, according to the method of manufacturing an electrode of the comparative example, because the dry electrode film was not removed, the uncoated portion region could not be formed.

According to the present disclosure, because adhesion between a current collector and a dry electrode film is high, there is no need to form an adhesion promoting layer on the current collector. Thus, a process of manufacturing an electrode is made easy.

According to the present disclosure, an uncoated portion region can be formed on the electrode without performing pattern-coating of the current collector, i.e. without forming the adhesion promoting layer. Thus, a process of manufacturing an electrode is made easy

According to the present disclosure, because the location and/or shape and/or size of the uncoated portion region can be easily controlled, the process of manufacturing an electrode is made easy.

According to the present disclosure, because the uncoated portion region is formed only on a portion of the current collector to which a tab is bonded, an area of an active material layer can be increased and battery capacity can thereby be increased.

Effects of the present disclosure are not limited to those described above, and other effects that are not specifically mentioned herein will be clearly understood by those skilled in the art based on the detailed description.

Although the present disclosure has been described above with reference to limited embodiments and accompanying drawings, the present disclosure is not limited thereto, and it goes without saying that various modifications and changes are possible for those skilled in the art.

## Claims

1. An electrode for a rechargeable battery, the electrode comprising:
a current collector having a first region and a second region; and
a dry electrode film positioned on at least one surface of the first region, and not positioned on the second region,
wherein each of the first region and the second region includes a plurality of protrusions formed on the current collector, and
an average height of the plurality of protrusions in the second region is greater than an average height of the plurality of protrusions in the first region.

2. The electrode of claim 1, wherein the plurality of protrusions in each of the first region and the second region extend from the current collector.

3. The electrode of claim 1 or claim 2, wherein a ratio of the average height of the plurality of protrusions in the second region to the average height of the plurality of protrusions in the first region is more than 1.0 and 2.0 or less.

4. The electrode of any one of claims 1 to 3, wherein the average height of the plurality of protrusions in the first region is from 1.5 µm to 5.0 µm, and the average height of the plurality of protrusions in the second region is from 1.7 µm to 5.0 µm.

5. The electrode of any one of claims 1 to 4, wherein no adhesion promoting layer is included in the first region and the second region.

6. The electrode of any one of claims 1 to 5, wherein an outer surface of the second region is in contact with the first region.

7. The electrode of any one of claims 1 to 6, wherein the second region has a quadrangular shape in a plan view, and three surfaces of the second region, corresponding to three sides of the quadrangular of the second region are surrounded by the first region.

8. A method of manufacturing an electrode for a rechargeable battery, the method comprising:
positioning a dry electrode film on an entire surface of a current collector having plurality of regions, on which a plurality of protrusions are formed;
positioning a template only on the dry electrode film corresponding to a region of the plurality regions to make a stack, with a thickness of the template being 60% or more of a thickness of the dry electrode film;
rolling the stack; and
removing the template and the dry electrode film located in another region of the plurality of regions from the stack to make an electrode for a rechargeable battery.

9. The method of claim 8, wherein the plurality of protrusions are formed by plating the current collector.

10. The method of claim 8 or claim 9, wherein an average height of the plurality of protrusions is 1.5 µm or more.

11. The method of any one of claims 8 to 10, wherein, in the step of positioning the dry electrode film on an entire surface of the current collector, a thickness of the dry electrode film is from 20 µm to 180 µm, and a thickness of the template is from 10 µm to 120 µm.

12. The method of any one of claims 8 to 11, wherein the template is a metal plate.

13. The method of any one of claims 8 to 12, wherein the rolling is performed under a load of 1000 to 3000 kg.

14. A rechargeable battery comprising the electrode for a rechargeable battery of any one of claims 1 to 7.

15. A rechargeable battery comprising an electrode for a rechargeable battery manufactured by the method of any one of claims 8 to 13.
